# DEMANDE DE BREVET EUROPEEN

(11) **EP 1 486 246 A2**
(43) Date de publication de la demande: **15.12.2004**
(21) Numéro de dépôt: 04291299.8
(22) Date de dépôt: 19.05.2004
(51) Int. Cl.: B01D 53/14, B01D 53/62

(54) **Procédé de traitement de fumées avec recuperation d'energie**

(30) Priorité: 10.06.2003 FR 0307035
(71) Demandeur: Institut Français du Pétrole, 92852 Rueil-Malmaison Cedex (FR)
(72) Inventeur: Charron, Yves, 91310 Longpont sur Orge (FR)

(57) **Abrégé**

La fumée issue de la turbine à gaz TG est refroidie par les échangeurs de chaleur E1, E2, E01, E02 et E03 et est comprimée par les compresseurs C1 et C2. La fumée froide et à haute pression est appauvrie en dioxyde de carbone dans l'unité de traitement 10. La fumée appauvrie en dioxyde de carbone est réchauffée par les échangeurs de chaleur E1 et E2, et détendue par les turbines T2 puis T1.

L'énergie récupérée sous forme de chaleur dans les échangeurs E01, E02 et E03 est transformée en énergie mécanique par le cycle moteur mis en oeuvre par la turbine T, le condenseur E et la pompe P. L'énergie mécanique est disponible sur l'arbre de la turbine T.

## Description

La présente invention concerne un procédé de traitement des fumées pour récupérer l'énergie disponible et pour capter à haute pression le CO₂ présent dans les fumées. La méthode s'applique en particulier aux fumées émises par les turbines à gaz et les chaudières.

Les fumées ou gaz d'échappement en sortie de turbine à gaz sont rejetées dans l'atmosphère à une température relativement élevée, environ 500°C. A ce niveau de température, l'énergie libérée dans l'atmosphère est comparable à l'énergie mécanique fournie par l'arbre de la turbine. Il est économiquement intéressant de récupérer cette énergie.
Les fumées sont riches en dioxyde de carbone (CO₂). Or, actuellement, des considérations écologiques conduisent à prévoir des mesures pour réduire les émissions de CO₂. Par exemple, certains pays imposent une taxe sur l'émission de CO₂. Donc, il devient de plus en plus intéressant au niveau économique et écologique de séparer le CO₂ contenu dans les fumées, afin de le stocker ou de le traiter.

Le document WO 00/48709 propose un procédé pour séparer et capter le CO₂ présent dans les fumées. Le procédé consiste à refroidir les fumées issues d'une turbine à gaz, de comprimer les fumées refroidies, de séparer le CO₂ des fumées comprimées refroidies, et de réchauffer puis de détendre les fumées pauvres en CO₂.
Le procédé divulgué par le document WO 00/48709 permet de réduire la consommation d'énergie nécessaire pour séparer et capter le CO₂ contenu dans les fumées. Cependant, ce procédé n'envisage pas de récupérer au mieux la totalité de l'énergie disponible dans les fumées en sortie de turbine à gaz.

La présente invention propose d'améliorer le procédé divulgué par le document WO 00/48709, notamment d'améliorer la récupération de l'énergie disponible dans les fumées.

De manière générale, l'invention concerne un procédé de traitement d'une fumée à haute température et basse pression pour récupérer l'énergie disponible et pour capter à haute pression le CO₂ présent dans les fumées, dans lequel on effectue les étapes :
a) on comprime la fumée à haute température et basse pression de manière à obtenir une fumée à moyenne pression,
b) on comprime la fumée à moyenne pression de manière à obtenir une fumée à haute pression,
c) on sépare une partie du dioxyde de carbone contenu dans ladite fumée à haute pression de manière a obtenir une fumée appauvrie en dioxyde de carbone et du dioxyde de carbone à haute pression,
d) on détend la fumée appauvrie en dioxyde de carbone,
   caractérisé en ce que,
e) on vaporise un fluide réfrigérant par échange de chaleur avec au moins la fumée à haute température et basse pression, la fumée à moyenne pression et la fumée à haute pression,
f) on détend le fluide vaporisé en récupérant de l'énergie mécanique,
g) on condense par refroidissement le fluide détendu,
h) on comprime le fluide condensé pour obtenir le fluide réfrigérant de l'étape e).

A l'étape d), on peut effectuer les étapes : i) on détend la fumée appauvrie en CO₂ de manière à obtenir une fumée détendue, ii) on réchauffe la fumée détendue pour obtenir une fumée réchauffée, et iii) on détend la fumée réchauffée.
A l'étape d), on peut réchauffer la fumée détendue par échange de chaleur avec la fumée à haute pression.
On peut réchauffer la fumée appauvrie en dioxyde de carbone par échange de chaleur avec la fumée à haute température et basse pression.
L'énergie fournie lors de la détente effectuée à l'étape d) peut être utilisée pour effectuer les compressions aux étapes a) et b).
Le taux de détente à l'étape i) peut être inférieur au taux de détente à l'étape iii). Le taux de compression à l'étape a) peut être inférieur au taux de compression à l'étape b).
Selon l'invention, on peut comprimer le dioxyde de carbone à haute pression et on peut injecter le dioxyde de carbone à haute pression dans un réservoir souterrain. Par exemple, on comprime le dioxyde de carbone en utilisant l'énergie mécanique obtenue à l'étape f).
A l'étape e), on peut vaporiser le fluide réfrigérant par échange de chaleur avec la fumée obtenue après la détente à l'étape d).

D'autres caractéristiques et avantages de l'invention seront mieux compris et apparaîtront clairement à la lecture de la description faite ci-après en se référant aux dessins parmi lesquels :
- la figure 1 schématise le procédé selon l'invention,
- la figure 2 schématise une variante du procédé selon l'invention.

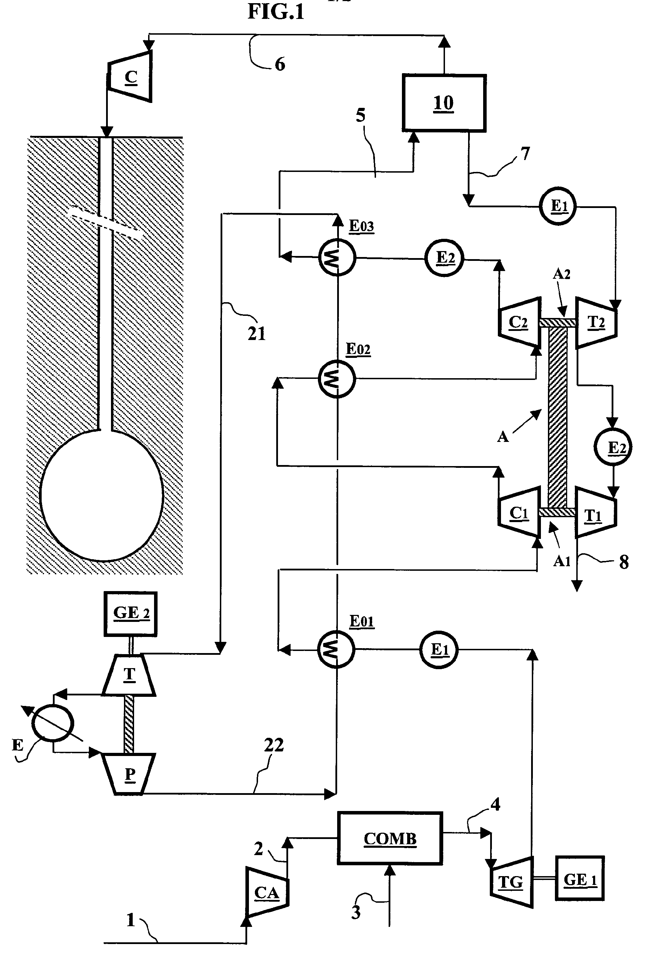

En référence à la figure 1, l'air circulant dans le conduit 1 est introduit dans le compresseur CA. L'air est évacué du compresseur par le conduit 2 sous une pression et une température supérieures à celles de l'air du conduit 1. L'air et un combustible contenant du carbone sont respectivement introduits par les conduits 2 et 3 dans la chambre de combustion COMB afin de réaliser une combustion et produire des gaz de combustion. Les gaz de combustion à haute pression et haute température sont introduits par l'intermédiaire du conduit 4 dans la turbine à gaz TG. La détente des gaz dans la turbine TG permet de produire de l'énergie mécanique qui peut être transformée en énergie électrique par le générateur électrique GE1. Les gaz de combustion, également dénommés gaz d'échappement ou fumées, en sortie de la turbine TG sont à haute température, environ 500°C et basse pression, environ la pression atmosphérique.
La présente invention vise à séparer et capter le CO₂ contenu dans ces gaz de combustion sous une pression la plus élevée possible en récupérant au mieux l'énergie contenue sous forme de chaleur dans les gaz de combustion en sortie de la turbine TG.
Les gaz de combustion en sortie de la turbine à gaz TG sont successivement refroidis dans les échangeurs de chaleur E1 puis E01, comprimés par le compresseur C1, refroidis dans l'échangeur de chaleur E02, comprimés par le compresseur C2, puis refroidis dans les échangeurs de chaleur E2 et E03, afin d'obtenir des gaz de combustion à haute pression et basse température.
Les gaz de combustion à haute pression et basse température issus de l'échangeur E03 sont introduits par le conduit 5 dans les moyens de traitement 10 adaptés pour séparer le CO₂ contenu dans les gaz de combustion. Le CO₂ séparé des gaz de combustion est évacué des moyens de traitement 10 par le conduit 6, par exemple vers une zone de stockage. La zone de stockage peut être un réservoir sous-terrain, par exemple une formation géologique correspondant à un réservoir pétrolier épuisé et accessible par un puits. Les gaz de combustion appauvris en CO₂ sont évacués par le conduit 7.

Les moyens de traitement 10 peuvent mettre en oeuvre des procédés de séparation du CO₂ bien connus tel un procédé utilisant un solvant aux amines. Un procédé utilisant un solvant aux amines fonctionne de préférence dans une plage de température comprise entre 0°C et 100°C. La proportion de CO₂ dans les gaz d'échappement étant faible (de l'ordre de 1 % à 5 %), il est intéressant d'augmenter la pression des gaz d'échappement afin d'augmenter la pression partielle du CO₂ contenu dans les gaz pour favoriser l'absorption du CO₂ par le solvant.

Les gaz appauvris en CO₂ issus des moyens de traitement par le conduit 7 sont successivement réchauffés dans l'échangeur de chaleur E1, détendus par la turbine T2, réchauffés dans l'échangeur de chaleur E2, détendus par la turbine T1, puis évacués dans l'atmosphère par l'intermédiaire du conduit 8.
Dans l'échangeur de chaleur E1, les gaz de combustion issus de la turbine TG échangent de la chaleur avec les gaz appauvris en CO₂ issu du moyen de traitement 10.
Dans l'échangeur de chaleur E2, les gaz de combustion issus du compresseur C2 échangent de la chaleur avec les gaz appauvris en CO₂ issus de la turbine T2.

Le procédé selon l'invention présente l'avantage d'effectuer une compression se rapprochant au mieux d'une compression isotherme basse température en procédant par plusieurs étapes de compression (par les compresseurs C1 et C2) et en effectuant des refroidissements (dans les échangeurs E1, E01 et E02) du gaz avant chaque étape de compression. Plus le nombre d'étapes de compression précédées de refroidissement est grand, plus la compression se rapproche d'une compression isotherme basse température. Ainsi la compression des gaz dans les compresseurs C1 et C2 est effectuée à basse température, et de ce fait améliore l'efficacité de la compression.
Le procédé selon l'invention présente l'avantage d'effectuer une détente se rapprochant au mieux d'une détente isotherme à haute température en procédant par plusieurs étape de détente (par les turbines T1 et T2) et en effectuant des réchauffements (dans les échangeurs E1 et E2) du gaz avant chaque étape de détente. Plus le nombre d'étapes de détente précédées de réchauffement est grand, plus la détente se rapproche d'une détente isotherme haute température. Ainsi la détente des gaz dans les turbines T1 et T2 est effectuée à haute température, et de ce fait améliore l'efficacité de la détente.

Pour que la compression soit effectuée à la plus basse température possible, et ainsi bénéficier de la meilleure efficacité lors de la compression dans les compresseurs C1 et C2, les gaz sont refroidis dans les échangeurs E01 et E02 par une source extérieure de froid. La source de froid peut consister en de l'air ou de l'eau. La source de froid des échangeurs E01 et E02 peut également consister en un circuit secondaire de refroidissement décrit ultérieurement.

Les machines C1, C2, T1 et T2 peuvent coopérer de manière à ce que l'énergie mécanique obtenue lors de la détente des gaz dans les turbines T1 et T2 soit utilisée pour la compression des gaz dans les compresseurs C1 et C2. Par exemple la turbine T1 est attelée au compresseur C1 au moyen de l'arbre A1 commun à T1 et C1. De la même façon, la turbine T2 est attelée au compresseur C2 au moyen de l'arbre A2. Lorsque les compresseurs C1 et C2 sont respectivement attelés aux turbines T1 et T2, il est préférable que le taux de compression (pression sortie/pression entrée) de C1 soit inférieur à celui de C2 et que le taux de détente (pression sortie/pression entrée) de T2 soit inférieur à celui de T1. Ainsi, la turbine T2, qui fournit plus d'énergie que la turbine T1, est directement attelée au compresseur C2, qui nécessite plus d'énergie que le compresseur C1.
Les machines C1, C2, T1 et T2 peuvent coopérer de manière à former une unique machine. Les arbres A1 et A2 peuvent être montés en tant que pignon satellite sur l'arbre principal A. Les arbres A1 et A2 peuvent coopérer avec l'arbre principal au moyen de roues dentées. Ainsi, le procédé selon l'invention est avantageusement mis en oeuvre par une machine unique. De plus, la machine unique telle que décrite précédemment permet d'équilibrer de manière automatique la puissance de compression totale exigée par les compresseurs C1 et C2 et la puissance de détente totale fournie par l'ensemble des turbines T1 et T2. L'équilibrage des puissances est réalisé indépendamment des déséquilibrages de puissance au niveau de chacun des compresseurs C1 et C2 et des turbines T1 et T2 (par exemple, le taux de compression de C1 peut être inférieur à celui de C2 tandis que le taux de détente de T2 est supérieur à celui de T1). La présence de l'arbre A engrainé par les arbres A1 et A2 assure le fonctionnement des compresseurs C1 et C2 sans source extérieure d'énergie.

Le CO₂ évacué des moyens de traitement 10 est sensiblement à la même pression que les gaz de combustion en sortie du compresseur C2. Il est intéressant de comprimer ce CO₂ pour en diminuer le volume et ainsi pouvoir manipuler plus facilement et de manière efficace le CO₂ lors de son transport vers le lieu de stockage. Le compresseur C permet de comprimer le CO₂ issu des moyens de traitement 10 jusqu'à des pressions pouvant être supérieures à 5 MPa ou 10 MPa. Le compresseur C, adapté pour comprimer le CO₂ sous forme gazeuse, peut être une pompe si le CO₂ issu des moyens de traitement 10 est sous forme liquide.

Les trois exemples numériques, présentés ci-après, illustrent le fonctionnement du procédé décrit en relation avec la figure 1 et démontrent l'intérêt de la présente invention.
Dans les trois exemples, on impose les conditions suivantes :
- les gaz de combustion sont évacués de la turbine à gaz TG à environ 550°C et à pression atmosphérique,
- les gaz de combustion sont refroidis à 40°C par les échangeurs E01 et E02 avant d'entrer dans les compresseurs C1 et C2,
- les gaz de combustion appauvris en CO₂ sont réchauffés à 540°C dans l'échangeur E1 par échange de chaleur avec les gaz de combustion évacués par la turbine à gaz TG,
- la puissance totale fournie par les turbines T1 et T2 est entièrement transférée aux compresseurs C1 et C2.

### Exemple 1 :

Les valeurs du tableau 1 illustrent le fonctionnement du procédé décrit en relation avec la figure 1 dans des conditions en dehors du cadre de l'invention : il n'y a pas de transfert de chaleur dans l'échangeur E2 entre les gaz d'échappement en sortie du compresseur C2 et des gaz appauvris en CO₂ en sortie de la turbine T2. Les taux de compression (pression sortie/pression entrée) des compresseurs C1 et C2 sont identiques, les taux de détente (pression sortie/pression entrée) dans les turbines T1 et T2 sont identiques.

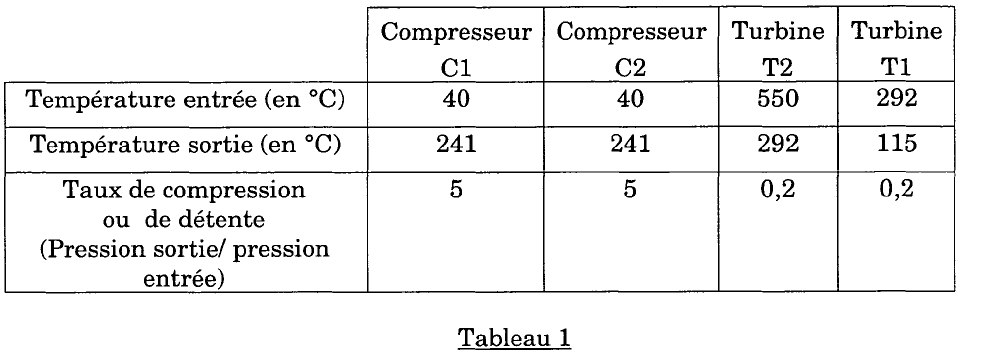

Le taux de compression cumulé de C1 et de C2 est de 25.

### Exemple 2:

Les valeurs du tableau 2 illustrent le fonctionnement du procédé décrit en relation avec la figure 1 dans des conditions selon l'invention. Les taux de compression de chacun des compresseurs C1 et C2 sont identiques. Le taux de détente de la turbine T1 est supérieur à celui de la turbine T2 afin de refroidir à une température basse les gaz en sortie de la turbine T2 et de permettre un échange de chaleur dans l'échangeur E2 entre les gaz d'échappement en sortie du compresseur C2 et des gaz appauvris en CO₂ en sortie de la turbine T2.

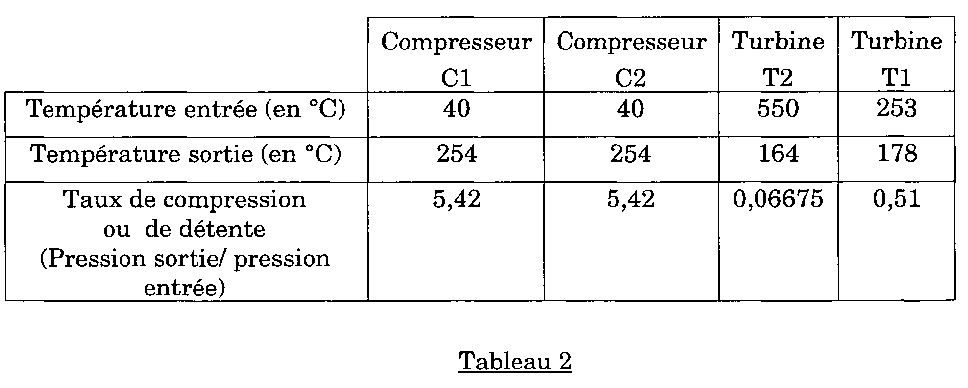

Le taux de compression cumulé de C1 et de C2 est de 29,4.
Le déséquilibrage du taux de détente entre la turbine T1 et T2 et le transfert de chaleur dans l'échangeur E2 a permis d'améliorer le taux de compression cumulé de C1 et de C2 de 25 dans les conditions de l'exemple 1 à 29,4 dans les conditions de l'exemple 2, sans apport d'énergie supplémentaire.

### Exemple 3 :

Les valeurs du tableau 3 illustrent le fonctionnement du procédé décrit en relation avec la figure 1 dans des conditions selon l'invention. Le taux de détente de la turbine T1 est supérieur à celui de la turbine T2 afin de refroidir à une température basse les gaz en sortie de la turbine T2 et de permettre un échange de chaleur dans l'échangeur E2 entre les gaz d'échappement en sortie du compresseur C2 et des gaz appauvris en CO₂ en sortie de la turbine T2. Le taux de compression du compresseur C1 est inférieur à celui du compresseur C2 afin de réchauffer à une température haute les gaz d'échappement en sortie du compresseur C2 et d'augmenter la quantité de chaleur échangée dans l'échangeur E2.

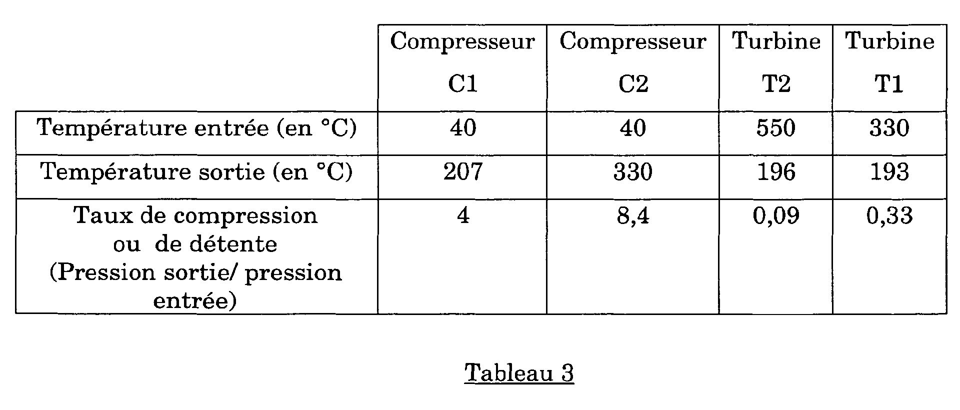

Le taux de compression cumulé de C1 et de C2 est de 33,6.
Le déséquilibrage du taux de compression entre le compresseur C1 et C2 et le transfert de chaleur dans l'échangeur E2 a permis d'améliorer le taux de compression cumulé de C1 et de C2 de 29,4 dans les conditions de l'exemple 2 à 33,6 dans les conditions de l'exemple 3, sans apport d'énergie supplémentaire.

Le circuit secondaire de refroidissement fonctionne avec un fluide réfrigérant en circuit fermé. Le fluide réfrigérant peut être un hydrocarbure tel le propane, l'isobutane ou l'isopentane, ou un autre fluide frigorigène permettant le passage de la phase liquide à la phase gazeuse et de la phase gazeuse à la phase liquide dans les conditions d'utilisation du circuit secondaire. Le circuit secondaire peut être basé sur le fonctionnement d'un cycle thermodynamique de Rankine. Contrairement à un cycle de réfrigération classique, l'étape d'évaporation s'opère à une pression supérieure à celle de l'étape de condensation.
Le fluide réfrigérant est évaporé dans les échangeurs E01, E02 et E03 afin de refroidir les gaz de combustion émis par la turbine à gaz TG, ainsi que les gaz de combustion issus des compresseurs C1 et C2. En outre, le fluide réfrigérant peut être réchauffé et vaporisé par échange de chaleur indirecte avec les gaz issus de la turbine T1.Le fluide réfrigérant évaporé en sortie de l'échangeur E03 est introduit dans les moyens de détente T, par exemple une turbine. Dans les moyens de détente, le fluide est détendu à basse pression par exemple comprise entre 0,1 MPa et 2 MPa. Le fluide détendu à basse pression est refroidi et condensé dans l'échangeur de chaleur E afin d'obtenir un fluide liquéfié. L'échangeur E peut utiliser un fluide ambiant tel l'air ou l'eau comme source froide. Le fluide liquéfié est comprimé par la pompe P depuis la basse pression jusqu'à une haute pression qui peut être comprise entre 0,5 MPa et 10 MPa. Le fluide liquide à haute pression est vaporisé dans les échangeurs E01, E02 et E03, et éventuellement par échange de chaleur indirect avec les gaz issus de la turbine T1.
L'énergie absorbée par le fluide sous forme de chaleur au niveau des échangeurs E01, E02 et E03 est récupérée sous forme d'énergie mécanique sur l'arbre de la turbine T. Cette énergie mécanique peut être transformée en énergie électrique par le générateur électrique GE2. L'arbre de la turbine T peut être attelé à l'arbre de la pompe P afin de fournir l'énergie nécessaire au pompage du fluide liquéfié. Avantageusement, le compresseur C, comprimant le CO₂ séparé dans les moyens 10, est entraîné grâce à l'énergie mécanique disponible sur l'arbre de la turbine T du circuit de secondaire de refroidissement. Par exemple, l'arbre du compresseur C est attelé à l'arbre de la turbine T du circuit secondaire.

Les trois exemples numériques, présentés ci-après, illustrent le fonctionnement du circuit secondaire décrit en relation avec la figure 1 et démontrent l'intérêt de la présente invention. Des hydrocarbures ont été choisis pour estimer le rendement du cycle moteur.
Les calculs de rendement de cycle ont été réalisés à l'aide de diagrammes de Mollier. La température des sources chaudes dans les échangeurs E01, E02 et E03 est prise à titre d'exemple à 200°C, la température de la source froide dans le condenseur E est de 40°C.

### Exemple 4 :

Le fluide réfrigérant est du propane. La pression du propane dans le condenseur E est fixée à 1,4 MPa a. Le tableau 4 présente le rendement théorique du cycle moteur en fonction de la pression dans les évaporateurs E01, E02 et E03.

**Tableau 4**

| | | | | |
|---|---|---|---|---|
| Pression évaporateur-MPa a | 4 | 10 | 20 | 38 |
| Rendement théorique-% | 13 | 20 | 23 | 25 |

Compte tenu du rendement de la turbine T, le rendement réel est d'environ 20 %

### Exemple 5 :

Le fluide réfrigérant est de l'isobutane. La pression de l'isobutane dans le condenseur E est fixée à 0,52 MPa a. Le tableau 5 présente le rendement théorique du cycle moteur en fonction de la pression dans les évaporateurs E01, E02 et E03.

**Tableau 5**

| | | | | |
|---|---|---|---|---|
| Pression évaporateur-MPa a | 1 | 2 | 10 | 20 |
| Rendement théorique-% | 7 | 12 | 22 | 23 |

Compte tenu du rendement de la turbine T, le rendement réel est d'environ 20 %

### Exemple 6:

Le fluide réfrigérant est de l'isopentane. La pression de l'isopentane dans le condenseur E est fixée à 0,14 MPa a. Le tableau 6 présente le rendement théorique du cycle moteur en fonction de la pression dans les évaporateurs E01, E02 et E03.

**Tableau 6**

| | | | | |
|---|---|---|---|---|
| Pression évaporateur-MPa a | 2,2 | 3,4 | 5 | 10 |
| Rendement théorique-% | 18 | 21,5 | 22,5 | 21 |

Compte tenu du rendement de la turbine T, le rendement réel est d'environ 18 %

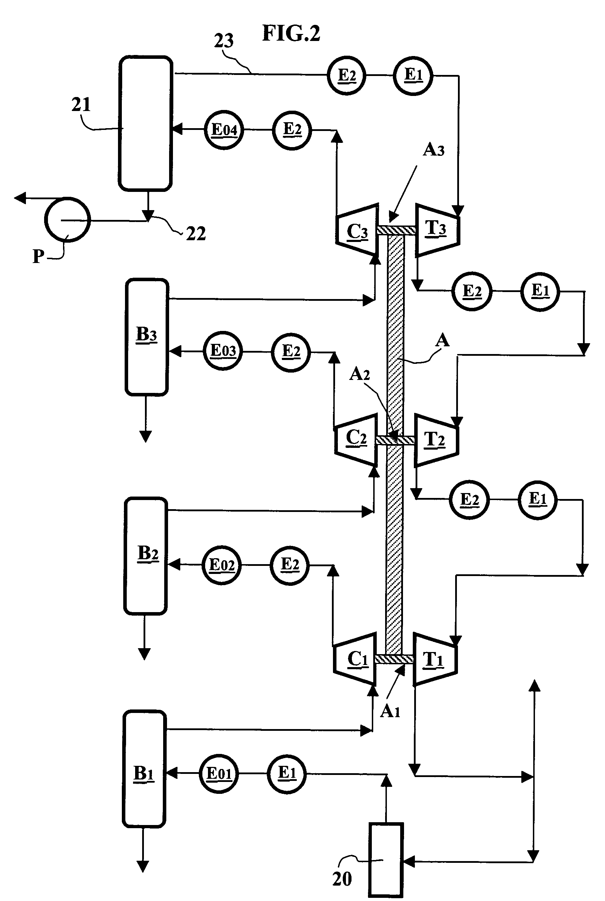

L'invention n'est pas limitée au mode de réalisation de la figure 1. Il est possible de faire varier le nombre de compresseurs et de turbines agissant sur les gaz d'échappement. Il est également possible de modifier le nombre et la position des échangeurs de chaleurs. La figure 2 représente un second mode de réalisation de l'invention.

En référence à la figure 2, la fumée issue de l'installation 20 (par exemple une turbine à gaz ou une chaudière, produisant des fumées à une température par exemple comprise entre 400°C et 600°C et sensiblement à la pression atmosphérique) comporte notamment de l'azote, de l'oxygène, du dioxyde de carbone et de l'eau.
La fumée est refroidie dans l'échangeur de chaleur E1, puis dans l'échangeur de chaleur E01 jusqu'à une température basse comprise entre 0°C et 100°C. La fumée à basse température est introduite dans le ballon de séparation B1. L'eau condensée lors des refroidissements dans les échangeurs de chaleur E1 et E01 est évacuée en fond du ballon B1.
La fumée évacuée en tête du ballon B1 est comprimée dans le compresseur C1. La fumée sous pression issue du compresseur C1 est refroidie dans l'échangeur de chaleur E2, puis dans l'échangeur de chaleur E02 jusqu'à une température basse comprise entre 0°C et 100°C. La fumée à basse température est introduite dans le ballon de séparation B2. L'eau condensée lors des refroidissements dans les échangeurs de chaleur E2 et E02 est évacuée en fond du ballon B2. La fumée évacuée en tête du ballon B2 est comprimée dans le compresseur C2. La fumée sous pression issue du compresseur C2 est refroidie dans l'échangeur de chaleur E2, puis dans l'échangeur de chaleur E03 jusqu'à une température basse comprise entre 0°C et 100°C. La fumée à basse température est introduite dans le ballon de séparation B3. L'eau condensée lors des refroidissements dans les échangeurs de chaleur E2 et E03 est évacuée en fond du ballon B3. La fumée évacuée en tête du ballon B3 est comprimée dans le compresseur C3. La fumée sous pression issue du compresseur C3 est refroidie dans l'échangeur de chaleur E2, puis dans l'échangeur de chaleur E04 jusqu'à une température basse comprise entre 0°C et 100°C.
La fumée à basse température est introduite dans les moyens 21 de captation sous haute pression de CO₂. Le CO₂ séparé de la fumée est évacué par le conduit 22, comprimé par la pompe P et envoyé vers un lieu de stockage. La fumée évacuée par le conduit 23 est appauvrie en CO₂.
La fumée appauvrie en CO₂ circulant dans le conduit 23 est réchauffée dans l'échangeur de chaleur E2, puis dans l'échangeur de chaleur E1. La fumée à haute température est détendue dans la turbine T3. Lors de la détente dans la turbine T3, la température de la fumée a diminué. La fumée est réchauffée dans l'échangeur de chaleur E2, puis dans l'échangeur de chaleur E1. La fumée à haute température est détendue dans la turbine T2. Lors de la détente dans la turbine T2, la température de la fumée a diminué. La fumée est réchauffée dans l'échangeur de chaleur E2, puis dans l'échangeur de chaleur E1. Ensuite, la fumée à haute température est détendue dans la turbine T1.
La fumée issue de la turbine T1 est évacuée dans l'atmosphère ou recyclée vers la turbine l'entrée de la turbine de l'installation 20.

La fumée est refroidie dans les échangeurs E01, E02, E03 et E04 par une source extérieure de froid. La source de froid peut consister en de l'air ou de l'eau. La source de froid des échangeurs E01, E02, E03 et E04 peut également consister en un circuit secondaire de refroidissement tel que décrit en relation avec la figure 1 (voir les références E01, E02, E03, 21, 22, T, P et E de la figure 1).
L'échangeur E1 permet d'échanger de la chaleur entre la fumée directement issue de l'installation 20 et la fumée appauvrie en CO₂ avant d'entrer dans les turbines T1, T2 et T3.
L'échangeur E2 permet d'échanger de la chaleur entre la fumée directement issue des compresseurs C1, C2 et C3 et la fumée appauvrie en CO₂ avant d'entrée dans les turbines T1, T2 et T3.

Les compresseurs C1, C2 et C3 sont couplés aux turbines T1, T2 et T3. Ainsi l'énergie mécanique obtenue lors de la détente de la fumée appauvrie en CO₂ permet d'entraîner les compresseurs C1, C2 et C3.
Les machines C1 et T1, respectivement C2 et T2, C3 et T3, peuvent être couplées par l'arbre A1, respectivement A2, A3. Les arbres A1, A2 et A3 peuvent être couplés à un arbre principal A unique par l'intermédiaire d'engrenages.
Ainsi, les compresseurs C1, C2 et C3, et les turbines T1, T2 et T3 forment une machine unique. L'énergie mécanique obtenue lors des détentes dans les turbines T1, T2 et T3 est transférée aux compresseurs C1, C2 et C3 indépendamment des déséquilibrages des taux de compression ou de détente des machines C1, C2 et C3, et T1, T2 et T3.

## Revendications

1. Procédé de traitement d'une fumée à haute température et basse pression pour récupérer l'énergie disponible et pour capter à haute pression le CO₂ présent dans les fumées, dans lequel on effectue les étapes :
a) on comprime ladite fumée à haute température et basse pression de manière à obtenir une fumée à moyenne pression,
b) on comprime ladite fumée à moyenne pression de manière à obtenir une fumée à haute pression,
c) on sépare une partie du dioxyde de carbone contenu dans ladite fumée à haute pression de manière a obtenir une fumée appauvrie en dioxyde de carbone et du dioxyde de carbone à haute pression,
d) on détend ladite fumée appauvrie en dioxyde de carbone,
**caractérisé en ce que**,
e) on vaporise un fluide réfrigérant par échange de chaleur avec au moins ladite fumée à haute température et basse pression, ladite fumée à moyenne pression et ladite fumée à haute pression,
f) on détend le fluide vaporisé en récupérant de l'énergie mécanique,
g) on condense par refroidissement le fluide détendu,
h) on comprime le fluide condensé pour obtenir le fluide réfrigérant de l'étape e).

2. Procédé selon la revendication 1, dans lequel à l'étape d) on effectue les étapes : i) on détend ladite fumée appauvrie en CO₂ de manière à obtenir une fumée détendue, ii) on réchauffe ladite fumée détendue pour obtenir une fumée réchauffée, et iii) on détend ladite fumée réchauffée.

3. Procédé selon la revendication 2, dans lequel à l'étape ii), on réchauffe ladite fumée détendue par échange de chaleur avec ladite fumée à haute pression.

4. Procédé selon l'une des revendications précédentes, avant l'étape d), on réchauffe ladite fumée appauvrie en dioxyde de carbone par échange de chaleur avec ladite fumée à haute température et basse pression.

5. Procédé selon l'une des revendications précédentes, dans lequel l'énergie fournie lors de la détente effectuée à l'étape d) est utilisée pour effectuer les compressions aux étapes a) et b).

6. Procédé selon l'une des revendications 2 à 5, dans lequel le taux de détente à l'étape i) est inférieur au taux de détente à l'étape iii).

7. Procédé selon l'une des revendications précédentes, dans lequel le taux de compression à l'étape a) est inférieur au taux de compression à l'étape b).

8. Procédé selon l'une des revendications précédentes, dans lequel on comprime ledit dioxyde de carbone à haute pression et on injecte ledit dioxyde de carbone à haute pression dans un réservoir souterrain.

9. Procédé selon la revendications 9, dans lequel on comprime ledit dioxyde de carbone en utilisant l'énergie mécanique obtenue à l'étape f).

10. Procédé selon l'une des revendications précédentes, dans lequel à l'étape e) on vaporise le fluide réfrigérant par échange de chaleur avec la fumée obtenue après la détente à l'étape d).
